# EUROPÄISCHE PATENTSCHRIFT

(11) **EP 2 703 237 B1**
(45) Veröffentlichungstag und Bekanntmachung des Hinweises auf die Patenterteilung: **22.10.2014**
(21) Anmeldenummer: 13194255.9
(22) Anmeldetag: 11.01.2007
(51) Int. Cl.: B60S 1/08

(54) **Baugruppe mit einem Regensensor und einer Halteklammer für den Regensensor.**
Assembly group with a rain sensor and a holding clip for the rain sensor.
Module avec un capteur de pluie et une agrafe de fixation pour le capteur de pluie.

(30) Priorität: 19.01.2006 DE 202006000853 U; 28.08.2006 DE 102006040213
(43) Veröffentlichungstag der Anmeldung: 05.03.2014
(62) Teilanmeldung aus: 07000497.3
(73) Patentinhaber: TRW Automotive Electronics & Components GmbH, 78315 Radolfzell (DE)
(72) Erfinder: Mordau, Ulf, 78652 Deißlingen (DE); Neumann, Andreas, 78343 Gaienhofen-Horn (DE)
(74) Vertreter: Prinz & Partner mbB

(56) Entgegenhaltungen:
- EP-A1- 1 491 404
- EP-A2- 1 486 388
- DE-B3-102004 032 749
- FR-A1- 2 839 016

## Beschreibung

Die Erfindung betrifft eine Halteklammer, mit der ein Sensor, insbesondere ein Regensensor, an einem Halterahmen montiert werden kann. Die Erfindung betrifft auch eine Baugruppe bestehend aus einem Halterahmen, der an einer Scheibe eines Kraftfahrzeugs angebracht werden kann, einem Sensor, insbesondere einem Regensensor, und einer Halteklammer, mittels welcher der Sensor am Halterahmen angebracht werden kann.

Aus der EP 1 202 885 ist ein Regensensor bekannt, der mittels zweier Federbügel an einem Halterahmen angebracht werden kann. Diese Art der Anbringung des Sensors erfordert ein vergleichsweise aufwendig gestaltetes Gehäuse des Sensors, damit die Federbügel angesetzt werden können, und erfordert vergleichsweise aufwendig hergestellte Federbügel, die mit gekrümmten und daher nicht leicht herzustellenden Abschnitten versehen sind. Außerdem ist die Endmontage vergleichsweise schwierig, da die beiden Federbügel verrastet werden müssen, während der Sensor im Halterahmen gehalten werden muss.
Dokument EP1486388 offenbart eine Halteklammer nach dem Oberbegriff des Anspruchs 1.
Die Aufgabe der Erfindung besteht darin, eine Halteklammer sowie eine Baugruppe mit Sensor und Halteklammer zu schaffen, die sich durch geringe Herstellungskosten sowie eine zuverlässige Montage auszeichnet.

Zur Lösung dieser Aufgabe ist erfindungsgemäß eine Halteklammer für einen Sensor vorgesehen, mit einer Platte, die den Sensor abdecken kann, mindestens einem Haltearm und mindestens einem Rastarm, die so ausgebildet sind, daß sie an einem Halterahmen für den Sensor angreifen können, wobei die Halteklammer einstückig ausgebildet ist. Die Erfindung beruht auf dem Grundgedanken, zur Befestigung des Sensors nur ein einziges Bauteil zu verwenden, nämlich die Halteklammer. Diese umgreift großflächig den Sensor auf der vom Halterahmen abgewandten Seite und kann mit einer flüssigen Bewegung, insbesondere mit einer Bewegung in einer einzigen Richtung, am Halterahmen verrastet werden.

Vorteilhafte Ausgestaltungen der Erfindung ergeben sich aus den Unteransprüchen.

Die Erfindung wird nachfolgend anhand einer Ausführungsform beschrieben, die in den beigefügten Zeichnungen dargestellt ist. In diesen zeigen:
- Figur 1 eine perspektivische Ansicht des mittels einer Halteklammer gemäß einer ersten zu der Erfindung nicht gehörenden Ausführungsform am Halterahmen montierten Sensors;
- Figur 2 eine zweite perspektivische Ansicht des mittels der Halteklammer gemäß der ersten zu der Erfindung nicht gehörenden Ausführungsform montierten Sensors;
- Figur 3 eine Draufsicht auf ein Stanzteil, welches zur Halteklammer gemäß der ersten zu der Erfindung nicht gehörenden Ausführungsform gebogen werden kann;
- Figur 4 eine perspektivische Ansicht der gebogenen Halteklammer gemäß der ersten zu der Erfindung nicht gehörenden Ausführungsform;
- Figur 5 eine weitere perspektivische Ansicht der gebogenen Halteklammer gemäß der ersten zu der Erfindung nicht gehörenden Ausführungsform;
- Figur 6 eine perspektivische Ansicht der am Sensor vormontierten Halteklammer gemäß der ersten zu der Erfindung nicht gehörenden Ausführungsform;
- Figur 7 in vergrößertem Maßstab einen Ausschnitt von Figur 6;
- Figur 8 einen ersten Schritt der Montage des Sensors am Halterahmen mittels einer Halteklammer gemäß der ersten zu der Erfindung nicht gehörenden Ausführungsform;
- Figur 9 in vergrößertem Maßstab einen teilgeschnittenen Ausschnitt von Figur 8;
- Figur 10 einen zweiten Schritt bei der Montage des Sensors mittels der Halteklammer gemäß der ersten zu der Erfindung nicht gehörenden Ausführungsform;
- Figur 11 in vergrößertem Maßstab einen Ausschnitt aus Figur 10;
- Figur 12 in einer Ansicht entsprechend derjenigen von Figur 11 einen dritten Schritt bei der Montage;
- Figur 13 in vergrößertem Maßstab eine Rastlasche der Halteklammer gemäß der ersten zu der Erfindung nicht gehörenden Ausführungsform im Zustand von Figur 10;
- Figur 14 in einer Ansicht entsprechend derjenigen von Figur 13 einen Zwischenzustand;
- Figur 15 in vergrößertem Maßstab den Rastarm im Zustand von Figur 12;
- Figur 16 eine perspektivische Ansicht des mittels einer Halteklammer gemäß einer zweiten Ausführungsform am Halterahmen montierten Sensors;
- Figur 17 eine zweite perspektivische Ansicht des mittels einer Halteklammer gemäß einer zweiten Ausführungsform montierten Sensors;
- Figur 18 eine perspektivische Ansicht der am Sensor vormontierten Halteklammer gemäß der zweiten Ausführungsform;
- Figur 19 den Sensor und die Halteklammer von Figur 18 vor einem ersten Schritt der Montage des Sensors am Halterahmen;
- Figur 20 den Sensor und die Halteklammer von Figur 18 nach einem ersten Schritt der Montage des Sensors am Halterahmen;
- Figur 21 in einer vergrößerten, teilgeschnittenen Ansicht ein Detail der Baugruppe von Figur 20;
- Figur 22 die Baugruppe von Figur 20 vor einem zweiten Schritt der Montage des Sensors am Halterahmen;
- Figur 23 die Rastarme in einer Zwischenstellung beim zweiten Schritt der Montage am Halterahmen;
- Figur 24 die Rastarme nach dem zweiten Montageschritt;
- Figur 25 in einer teilgeschnittenen Ansicht einen der Rastarme vor dem zweiten Schritt der Montage am Halterahmen;
- Figur 26 den Rastarm von Figur 25 in einer Zwischenstellung beim zweiten Montageschritt;
- Figur 27 den Rastarm von Figur 26 nach dem zweiten Montageschritt;
- Figur 28 in einer teilgeschnittenen Ansicht einen der Haltearme vor dem zweiten Schritt der Montage am Halterahmen;
- Figur 29 den Haltearm von Figur 28 in einer Zwischenstellung beim zweiten Montageschritt; und
- Figur 30 den Haltearm von Figur 29 nach dem zweiten Montageschritt.

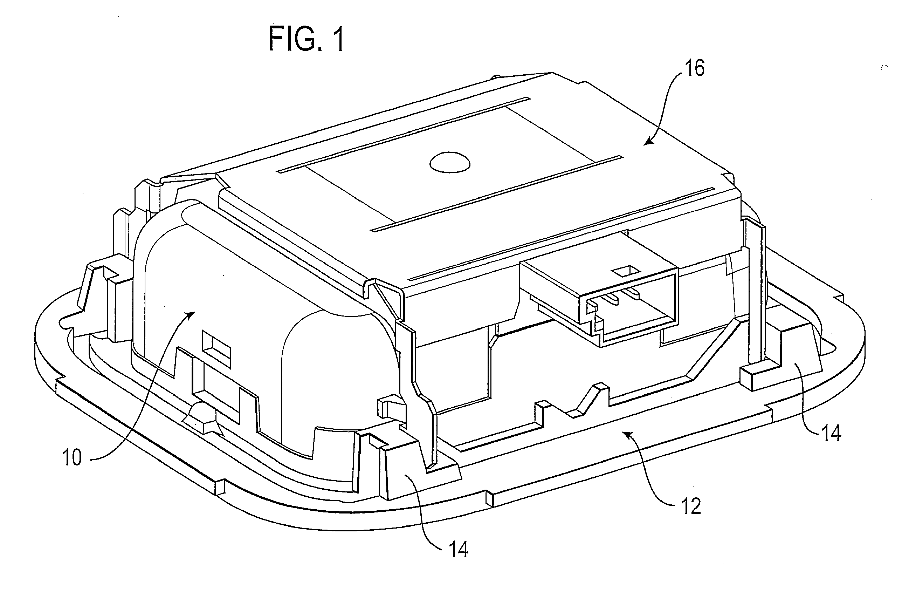

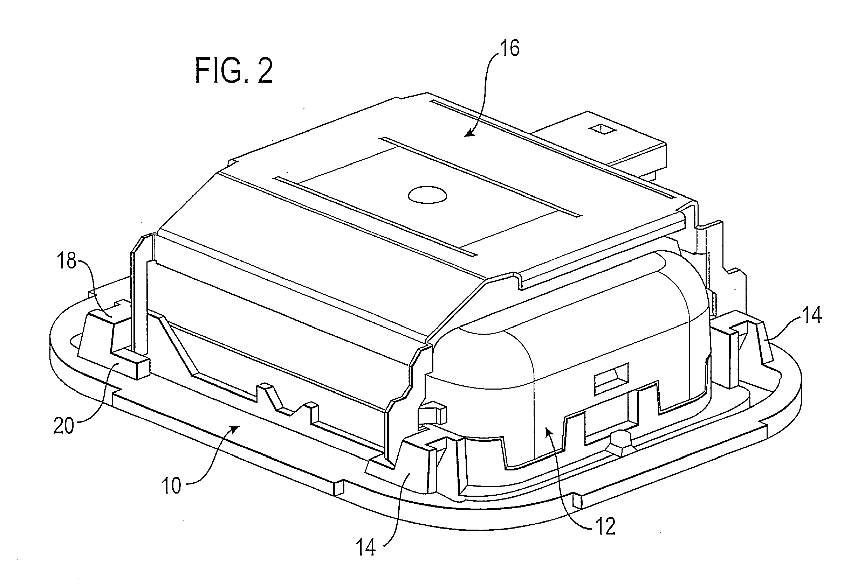

In den Figuren 1 und 2 ist ein Sensor 10 gezeigt, der insbesondere ein Regensensor sein kann, der an einer Windschutzscheibe eines Kraftfahrzeugs angebracht wird. Der Sensor 10 ist in einen Halterahmen 12 eingesetzt, der mit der Windschutzscheibe verklebt sein kann. Der Halterahmen 12 weist insgesamt vier Widerlager 14 auf, die dazu dienen, eine Halteklammer 16 gemäß einer ersten Ausführungsform fest mit dem Halterahmen 12 zu verrasten. Jedes Widerlager 14 besteht aus einem Bügel 18 sowie einem Fixiersteg 20.

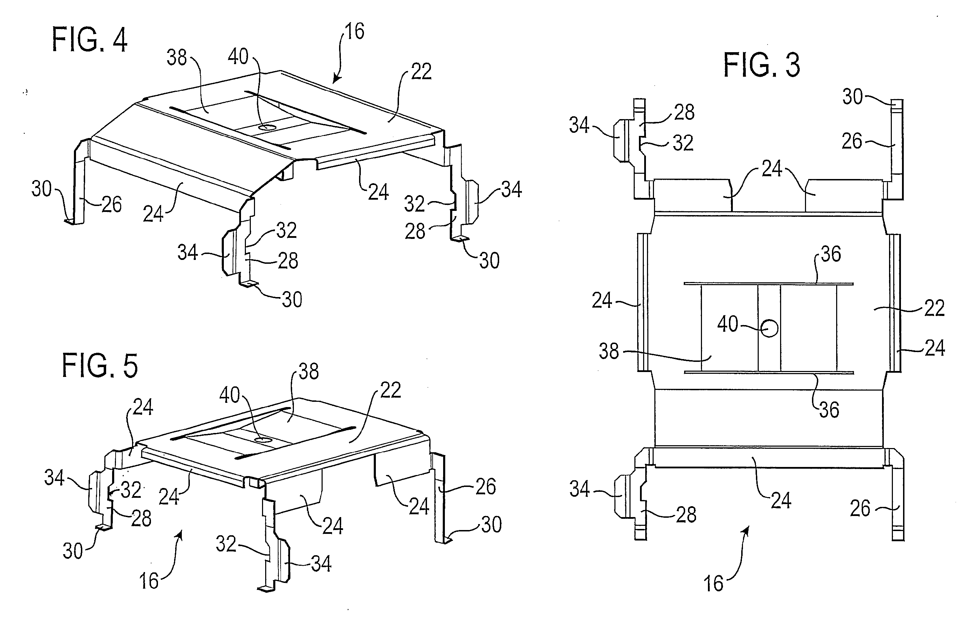

Die Halteklammer 16 (siehe insbesondere die Figuren 3 bis 5) ist ein einstückiges, gestanztes Blechbiegeteil, das eine Platte 22, an jeder Seite der Platte einen abgebogenen Rand 24, zwei Haltearme 26 und zwei Rastarme 28 aufweist.

Die beiden Haltearme 26 weisen ebenso wie die beiden Rastarme 28 an ihrem freien, von der Platte 22 abgewandten Ende einen abgebogenen Fuß 30 auf. Die Haltearme 26 sind mit einer geraden Außenkontur ausgeführt, während die Rastarme 28 auf ihrer Innenseite jeweils eine Aussparung 32 aufweisen. Außenseitig ist jeweils ein Flügel 34 vorgesehen. Der Flügel 34 dient zum einen dazu, den Rastarm 28 so zu stabilisieren, daß trotz der Aussparung 32 die notwendige Festigkeit gewährleistet ist. Zum anderen ermöglicht er, bei der später erläuterten Vormontage den entsprechenden Rastarm hinter eine Rastnase zu ziehen.

In die Platte 22 sind zwei parallele, schlitzartige Einschnitte 36 gestanzt, so daß zwischen ihnen eine Federlasche 38 definiert ist. Die Federlasche 38 ist aus der Ebene der Platte nach unten herausgebogen (siehe insbesondere die Figuren 4 und 5), also auf die Seite, auf der sich auch die Haltearme 26 und die Rastarme 28 befinden. Mittig ist die Federlasche 38 mit einer Öffnung 40 versehen.

In einem ersten Schritt der Montage wird die Halteklammer 16 am Sensor 10 vormontiert. Dabei wird die Platte 22 auf die Rückseite des Sensors aufgesetzt, so daß sich die Haltearme und die Rastarme seitlich etwa in der Nähe der Ecken des Gehäuses des Sensors 10 entlang dem Gehäuse erstrecken. Die abgebogenen Ränder 24 dienen dabei zur Fixierung. Die Positionierung wird weiterhin durch eine Aussparung an einem Rand 24 verbessert, in die ein Steckverbinder 43 des Sensors 10 eingesetzt ist. Außerdem ist das Gehäuse des Sensors 10 mit einem Fixiervorsprung 42 versehen, der in die Öffnung 40 in der Federlasche 38 eingreift.

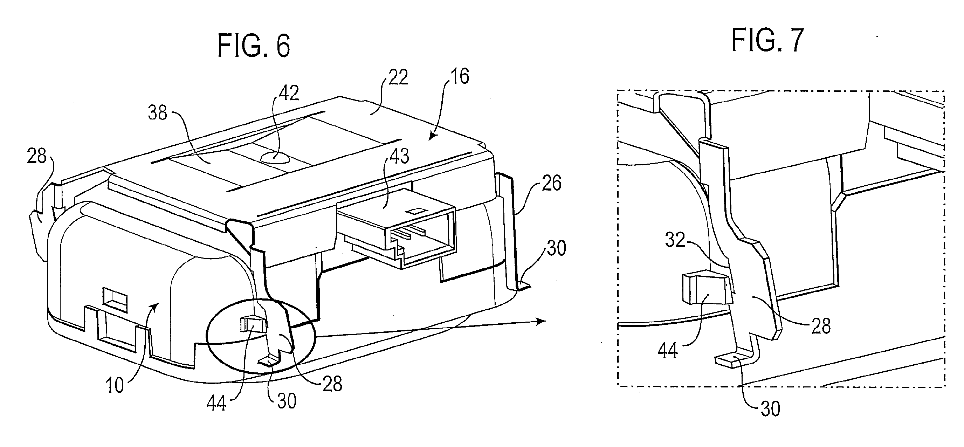

Am Gehäuse des Sensors 10 sind zwei Rastnasen 44 vorgesehen, die mit den beiden Rastarmen 28 zusammenwirken können. In dem in den Figuren 6 und 7 gezeigten, vormontierten Zustand halten die Rastnasen 44 die Rastarme 28 in einem elastisch ausgelenkten Zustand. Genauer gesagt werden die Rastarme 28 in einem Zustand gehalten, in dem ihre Füße 30 zu den Haltearmen 26 hingebogen sind, so daß der Abstand zwischen den Füßen eines Rastarms 28 und eines Haltearms 26 auf einer Seite des Gehäuses des Sensors verringert ist. Es ist in Figur 7 zu sehen, daß die Rastnase 44 dabei knapp unterhalb der Aussparung 32 am Rastarm 28 angreift.

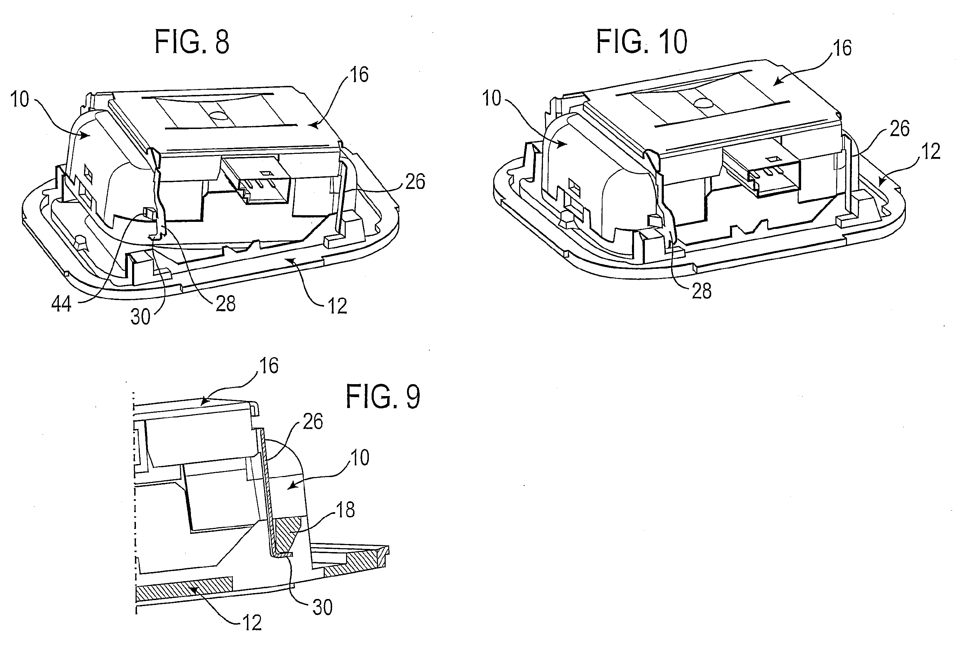

In diesem vormontierten Zustand werden der Sensor 10 und die Halteklammer 16 in den Rahmen 12 so eingesetzt, daß die Füße 30 der Haltearme 26 in die Bügel 18 an einer Seite des Halterahmens 12 eingreifen (siehe die Figuren 8 und 9). Die Fixierstege 20 dienen dabei zur Vorfixierung und verhindern, daß die Haltearme 26 seitlich verrutschen. Da die Rastnasen 44 die Rastarme 28 in einem elastisch ausgelenkten Zustand halten, können die Füße 30 der Rastarme 28 an dem ihnen zugeordneten Bügel vorbeibewegt werden, so daß der Sensor 10 mit der Halteklammer 16 aus der in Figur 8 gezeigten Stellung vollständig nach unten in die in Figur 10 gezeigte Stellung verschwenkt werden kann.

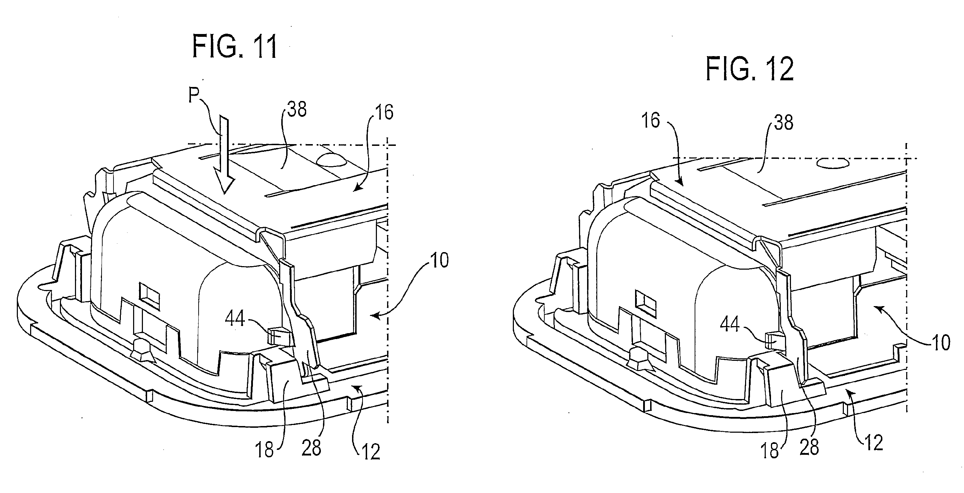

Wenn anschließend in der Richtung des Pfeils P auf die Seite der Platte 22 der Halteklammer 16 gedrückt wird, auf der sich die Rastarme 28 befinden, wird die Platte 22, entgegen der elastischen Andruckkraft der Federlasche 38, näher an den Sensor 10 gedrückt. Dabei verschieben sich die Rastarme 28 relativ zu den Rastnasen 44, so daß die Aussparungen 32 in den Bereich der Rastnasen 44 gelangen. Dadurch werden die Rastarme 28 freigegeben, so daß sie in ihre Ausgangsstellung schnappen (siehe Figur 12), in der ihre Füße 30 innerhalb der Bügel 18 am Halterahmen 12 liegen. Der Sensor 10 ist nun ordnungsgemäß am Halterahmen 12 angebracht, wobei er elastisch in seine korrekte Lage beaufschlagt ist. Dies ist gut erkennbar durch Vergleich der Federlasche in den Figuren 11 und 12; in Figur 12 ist die Federlasche aus ihrer in Figur 11 gezeigten Ausgangsstellung elastisch ausgelenkt, so daß sie den Sensor in den Halterahmen 12 drückt.

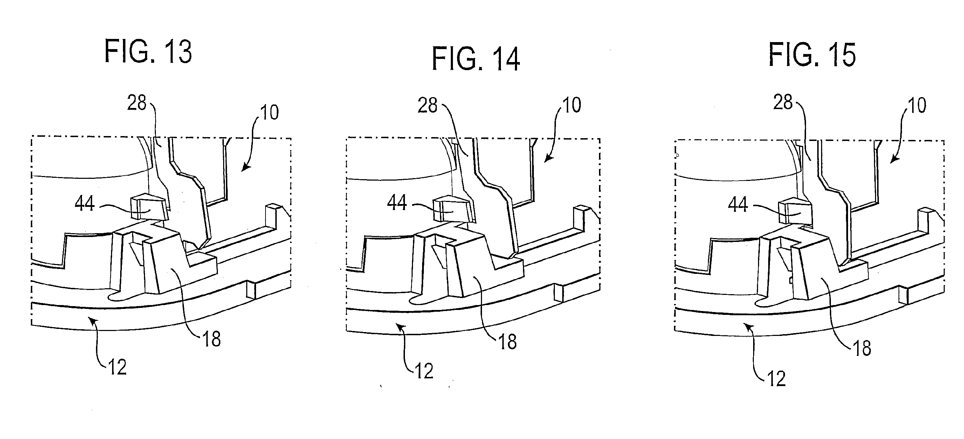

Die Relativbewegung zwischen den Rastarmen 28 und den Rastnasen 44 am Gehäuse des Sensors 10 ist zur Verdeutlichung nochmals in den Figuren 13 bis 15 gezeigt. In Figur 13 ist der vormontierte Zustand gezeigt, in welchem die Rastnase 44 den Rastarm 28 ausgelenkt hält. In Figur 14 ist der Rastarm 28 in dem Zustand gezeigt, in welchem er gerade so weit nach unten relativ zur Rastnase 44 verstellt ist, daß die Rastnase in die Aussparung 32 eintauchen kann. In Figur 15 ist dann der Zustand gezeigt, in welchem der Rastarm 28 in seine Ausgangsstellung zurückgeschnappt ist.

Ein besonderer Vorteil der erfindungsgemäßen Halteklammer und der erfindungsgemäßen Baugruppe besteht darin, daß der Sensor zusammen mit der vormontierten Halteklammer an das Fahrzeug geliefert werden kann, in welchem bereits der Halterahmen verbaut ist. Der Sensor kann dann zusammen mit dem Halterahmen, der sich in einem präzise definierten Zustand befindet, mittels einer einfachen Handbewegung in den Halterahmen eingesetzt und an diesen eingedrückt werden, wodurch die Halteklammer automatisch verrastet. Das Zurückschnappen der Rastarme gibt auch eine akustische Rückmeldung dahingehend, daß die Verrastung ordnungsgemäß erfolgt ist.

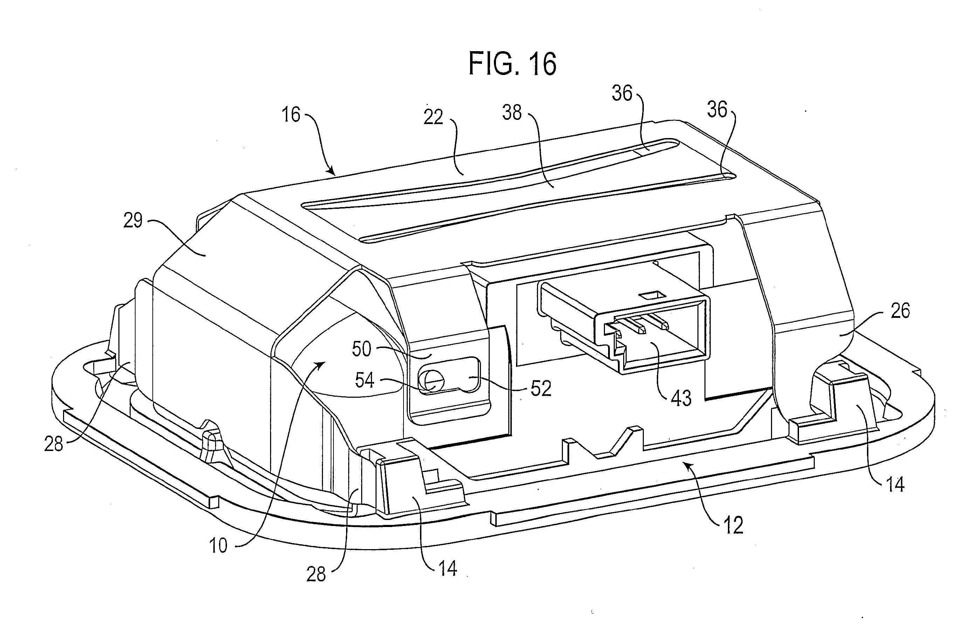

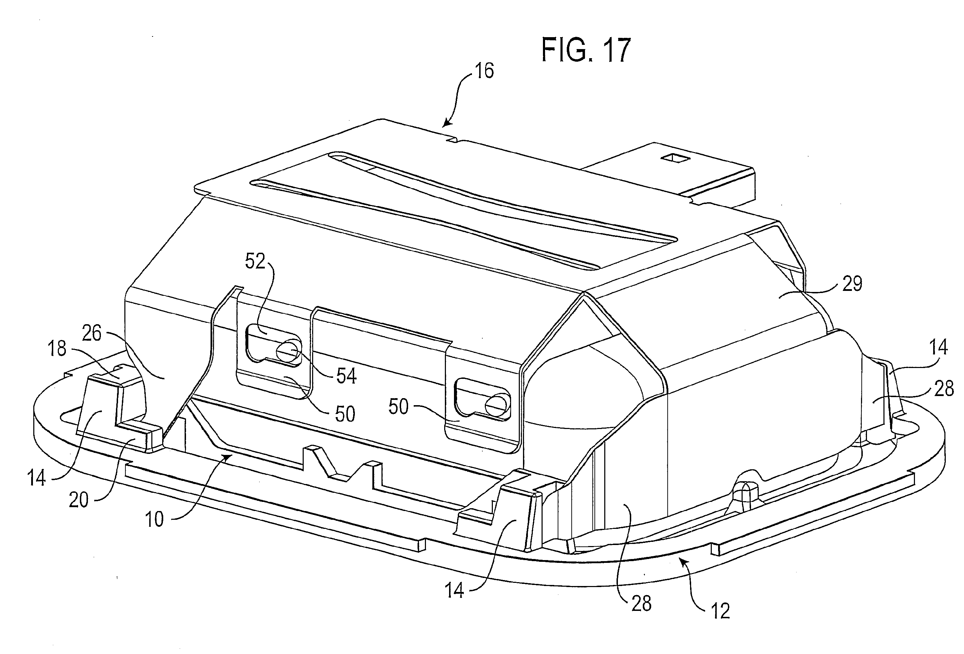

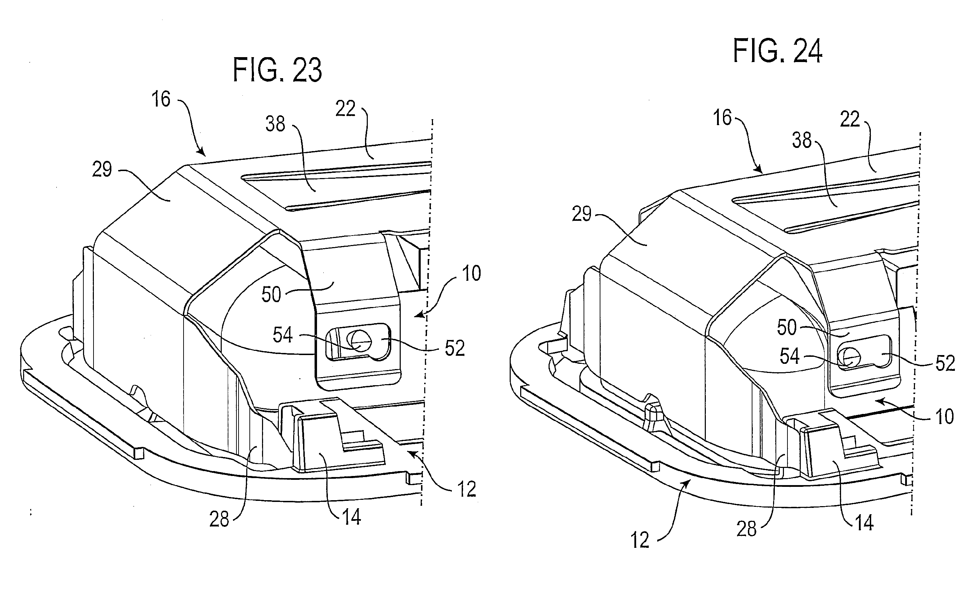

In den Figuren 16 bis 30 sind ein Sensor 10 mit einer Halteklammer 16 gemäß einer zweiten zu der Erfindung gehörenden Ausführungsform und die Montage des Sensors 10 mittels dieser Halteklammer 16 gezeigt. Für die von der ersten Ausführungsform bekannten Bauteile werden dieselben Bezugszeichen verwendet, und es wird insoweit auf die obigen Erläuterungen verwiesen.

Ein Unterschied zwischen der ersten und der zweiten Ausführungsform besteht darin, daß bei der zweiten Ausführungsform die beiden Rastarme 28 nicht unmittelbar von der Platte 22 ausgehen, sondern von einem Verbindungssteg 29 ausgehen, der seinerseits mit der Platte 22 verbunden ist.

Ein weiterer Unterschied zwischen der ersten und der zweiten Ausführungsform besteht darin, daß bei der zweiten Ausführungsform die beiden Rastarme 28 und die beiden Haltearme 26 keinen abgebogenen Fuß 30 aufweisen, sondern jeweils ein allgemein hakenförmiges freies Ende. Am freien Ende jedes Haltearms 26 bzw. Rastarms 28 ist eine leicht verbreiterte Spitze 31 vorgesehen, hinter der (zum Haltearm 26 bzw. Rastarm 28 hin) eine Vertiefung angeordnet ist. Der Abstand zur Platte 22 ist im Bereich der verbreiterten Spitze 31 geringer als im Bereich der Vertiefung.

Ein wiederum weiterer Unterschied zwischen der ersten und der zweiten Ausführungsform besteht darin, daß bei der zweiten Ausführungsform die Spitzen 31 der Haltearme 26 bzw. Rastarme 28 in derselben Richtung ausgerichtet sind und nicht, wie die Füße 30 der ersten Ausführungsform, in entgegengesetzten Richtungen. Entsprechend sind bei der zweiten Ausführungsform die Widerlager 14 am Halterahmen 12 in derselben Richtung offen anstatt in entgegengesetzten Richtungen, wie bei der ersten Ausführungsform.

Ein weiterer erwähnenswerter Unterschied zwischen der ersten und der zweiten Ausführungsform besteht darin, daß bei der zweiten Ausführungsform die Halteklammer 16 mit einer Montagehilfe versehen ist, die in der Form von drei seitlichen Laschen 50 ausgebildet ist. Diese sind an den Längsseiten der Platte 22 angeordnet. Zwei Laschen 50 liegen einander gegenüber, und die dritte liegt gegenüber der Stelle, an welcher der Steckverbinder 43 des Sensors 10 angeordnet ist. Jede Lasche weist eine Führungskulisse 52 auf, in die ein Führungsvorsprung 54 des Sensors 10 eingreift. Die Führungskulisse 52 ist allgemein langgestreckt parallel zur Platte 22 und weist an ihrem Vorderende, das in der Richtung der verbreiterten Spitzen der Haltearme 26 bzw. Rastarme 28 weist, eine Vertiefung zur Aufnahme des Führungszapfens auf. Allgemein ausgedrückt hat die Führungskulisse 52 die Form eines liegenden "L", wobei der kurze Schenkel des L nach unten, von der Platte 22 weg zeigt.

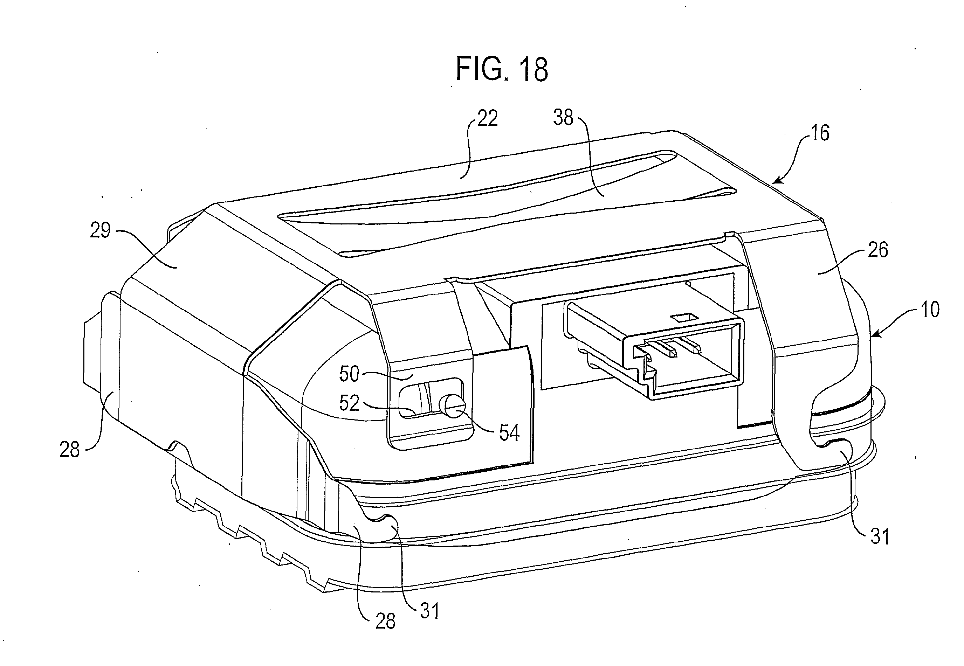

Im Ausgangszustand (Figur 18) ist die Halteklammer 16 am Sensor 10 vormontiert. Die Führungsvorsprünge 54 des Sensors 10 greifen in die Führungskulissen 52 der Halteklammer 16 ein und liegen in den Vertiefungen. Die Federlasche 38 ist nicht oder nur geringfügig vorgespannt.

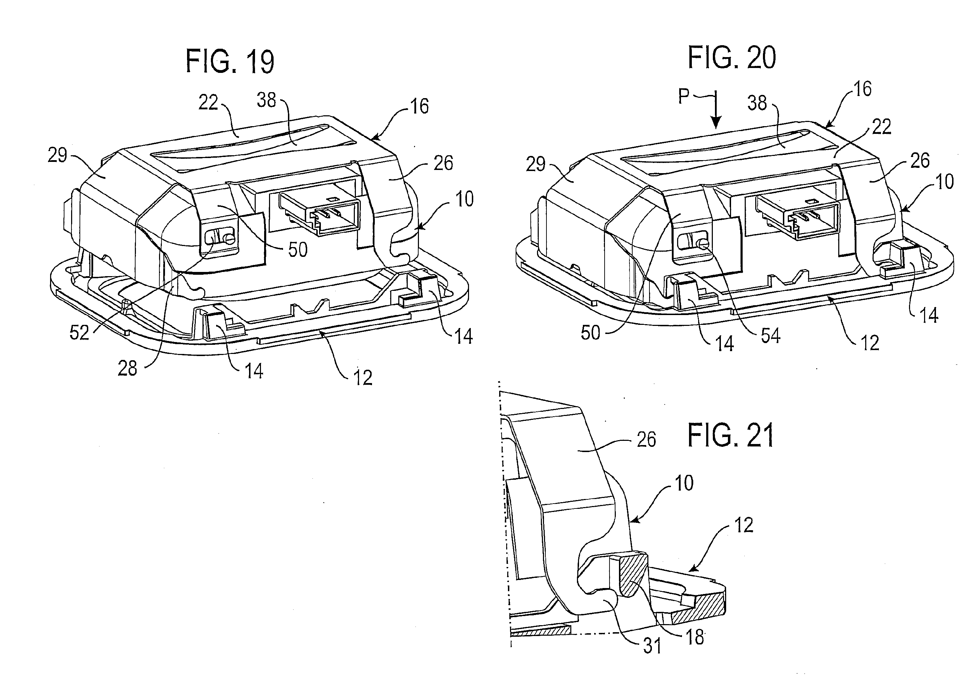

Der Sensor 10 wird am Halterahmen 14 montiert, indem er in einem ersten Schritt in der Richtung des Pfeils P von Figur 20 auf den Halterahmen 12 so aufgesetzt wird, daß die Spitzen der Halterarme 26 bzw. Rastarme 28 vor den Widerlagern 14 liegen (siehe die Figuren 20, 21, 25 und 28). Der Sensor 10 befindet sich dann bereits in seiner endgültigen Stellung.

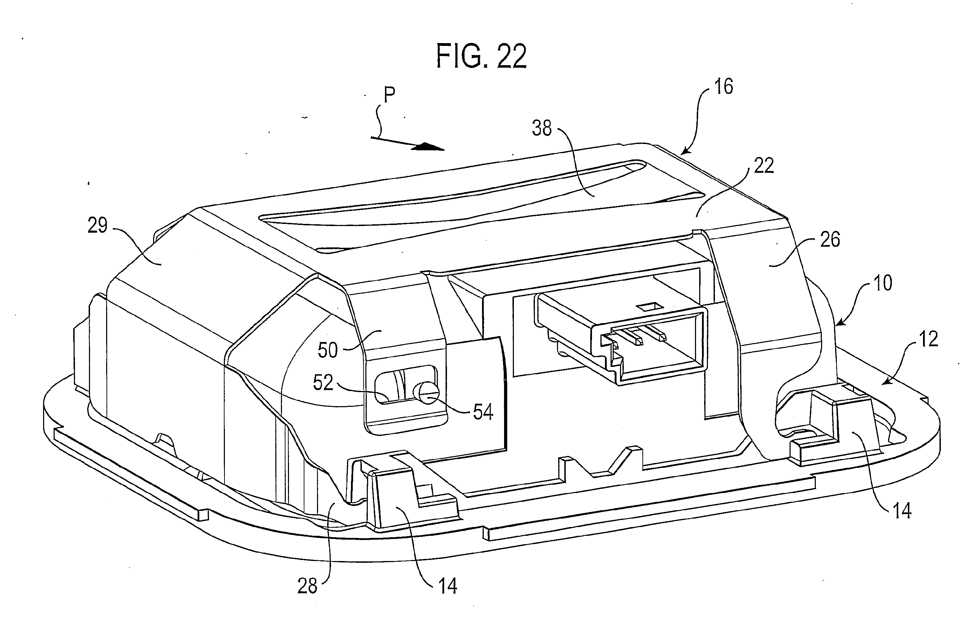

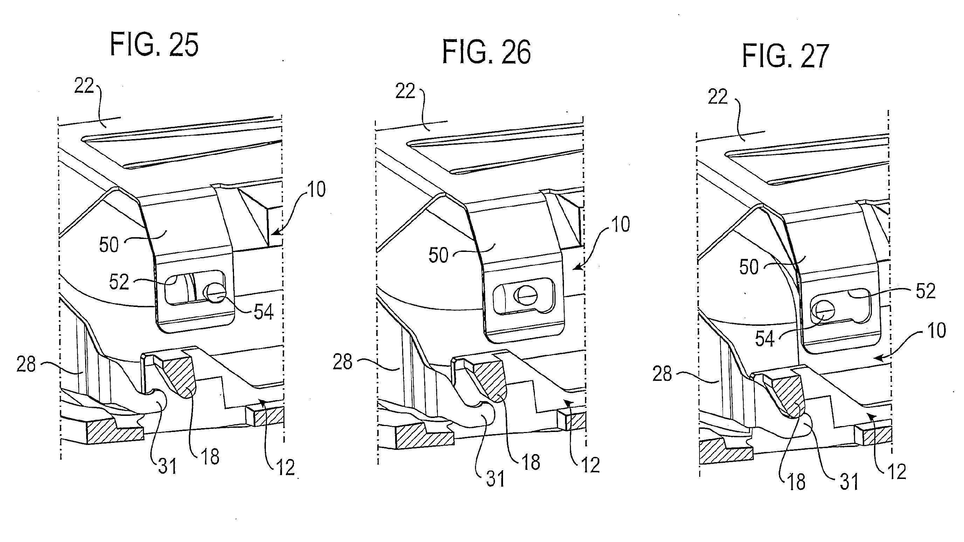

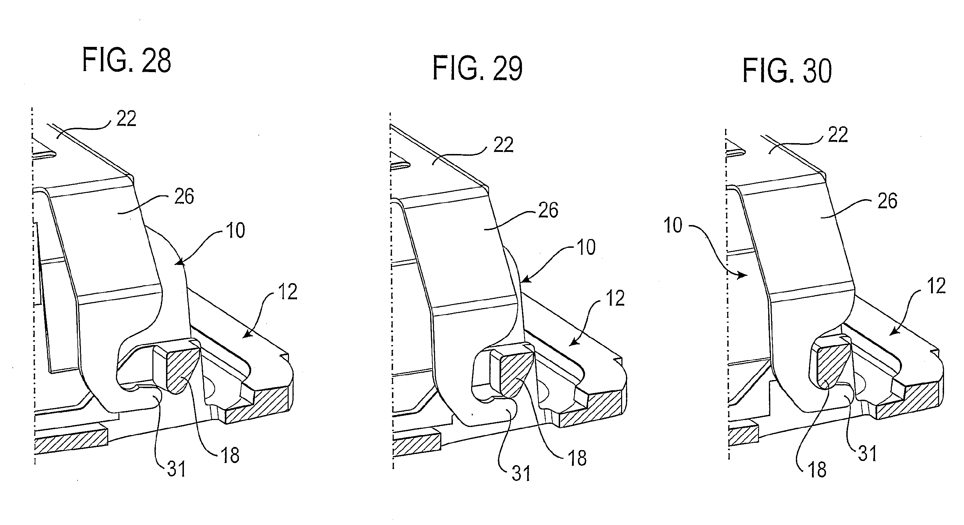

Dann wird die Halteklammer 16 in einem zweiten Schritt in der Richtung des Pfeils P von Figur 22 schräg zum Halterahmen 12 gedrückt, also nach unten zum Halterahmen 12 und zur Seite. Die Führungskulissen 52 und die Führungsvorsprünge 54 unterstützen dabei, da sie die Bewegungsrichtung vorgeben. Bei der Verschiebung der Halteklammer 16 relativ zum Sensor 10 und zum Halterahmen 12 gelangen die verbreiterten Spitzen der Haltearme 26 bzw. der Rastarme 28 in eine Zwischenstellung, in der sie unter den Bügeln 18 der Widerlager 14 liegen (siehe die Figuren 26 und 29). In dieser Zwischenstellung ist die Federlasche 38 maximal vorgespannt.

Durch weiteres Verschieben der Halteklammer 16 relativ zum Sensor 10 und zum Halterahmen 12 rutschen die verbreiterten Spitzen 31 unter den Bügeln 18 durch, so daß diese in der Vertiefung hinter der Spitze 31 der Haltearme 26 bzw. Rastarme 28 einrasten und zu liegen kommen. Die Halteklammer 16 ist nun sicher am Halterahmen 12 befestigt, wodurch auch der Sensor 10 sicher montiert ist. Die Vorspannung beträgt rund einen Millimeter bei einer Haltekraft von rund 80 N.

## Patentansprüche

1. Baugruppe mit einem Regensensor (10) und einer Halteklammer (16) für den Regensensor (10), wobei die Halteklammer eine Platte (22) aufweist, die den Sensor abdecken kann, sowie mindestens einen Haltearm (26) und mindestens einen Rastarm (28), die so ausgebildet sind, daß sie an einem Halterahmen (12) zur befestigung der Baugruppe angreifen können, wobei die Halteklammer (16) einstückig ausgebildet ist und der Regensensor (19) an der Halteklammer (16) vormontiert ist, **dadurch gekennzeichnet, daß** der Sensor einen Führungsvorsprung (54) aufweist, der in eine Führungskulisse (52) einer Montagelasche (50) der halteklammer (16) eingreift und daß der Sensor mittels des Führungsvorsprungs (54) unverlierbar an der Halteklammer (16) vormontiert ist.

2. Baugruppe nach Anspruch 1, **dadurch gekennzeichnet, daß** die Halteklammer (16) ein Blechbiegeteil ist.

3. Baugruppe nach einem der vorhergehenden Ansprüche, **dadurch gekennzeichnet, daß** in der Platte (22) mindestens eine Federlasche (38) vorgesehen ist, die aus der Ebene der Platte in Richtung zum Sensor hin herausgebogen ist.

4. Baugruppe nach Anspruch 3, **dadurch gekennzeichnet, daß** die Federlasche (38) durch zwei parallele Einschnitte (36) in der Platte (22) der Halteklammer (16) definiert ist.

5. Baugruppe nach Anspruch 3 oder Anspruch 4, **dadurch gekennzeichnet, daß** in der Federlasche (38) eine Öffnung (40) für einen Fixiervorsprung (42) des Sensors (10) vorgesehen ist.

6. Baugruppe nach einem der vorhergehenden Ansprüche, **dadurch gekennzeichnet, daß** die Platte (22) mit einem abgebogenen Rand (24) versehen ist, der zur Fixierung des Sensors dient.

7. Baugruppe nach Anspruch 6, **dadurch gekennzeichnet, daß** der Haltearm (26) bzw. der Rastarm (28) am abgebogenen Rand (24) der Platte (22) vorgesehen sind.

8. Baugruppe nach Anspruch 7 oder Anspruch 8, **dadurch gekennzeichnet, daß** der abgebogene Rand (24) mit einer Aussparung für einen Steckverbinder (43) des Sensors versehen ist.

9. Baugruppe nach einem der Ansprüche 1 bis 6, **dadurch gekennzeichnet, daß** die Platte (22) mit einer Montagehilfe (50) versehen ist, mittels der die Halteklammer (16) mit dem Sensor (10) verbunden werden kann.

10. Baugruppe nach Anspruch 9, **dadurch gekennzeichnet, daß** die Montagehilfe nach Art einer seitlichen Lasche (50) ausgebildet ist.

11. Baugruppe nach Anspruch 9 oder Anspruch 10, **dadurch gekennzeichnet, daß** die Montagehilfe eine Führungskulisse (52) aufweist, in die ein Führungsvorsprung (54) des Sensors (10) eingreifen kann.

12. Baugruppe nach einem der vorhergehenden Ansprüche, **dadurch gekennzeichnet, daß** an einer Seite der Platte zwei Haltearme (26) und an der anderen Seite zwei Rastarme (28) vorgesehen sind.

13. Baugruppe nach einem der Ansprüche 1 bis 11, **dadurch gekennzeichnet, daß** die beiden Rastarme (28) mittels eines gemeinsamen Verbindungssteges (29) mit der Platte (22) verbunden sind.

14. Baugruppe nach einem der vorhergehenden Ansprüche, **dadurch gekennzeichnet**, das die Baugruppe einen Halterahmen (12) aufweist, der auf einer Scheibe eines Kraftfahrzeugs angebracht werden kann.

## Claims

1. An assembly comprising a rain sensor (10) and a holding clip (16) for the rain sensor (10), the holding clip including a plate (22) which can cover the sensor, and at least one holding arm (26) and at least one detent arm (28) which are configured such that they can engage a holding frame (12) for fastening the assembly, the holding clip (16) being formed in one piece, and the rain sensor (19) being preassembled on the holding clip (16), **characterized in that** the sensor includes a guide projection (54) which engages into a guide slot (52) of a mounting tongue (50) of the holding clip (16) and **in that** the sensor is captively preassembled on the holding clip (16) by means of the guide projection (54).

2. The assembly according to claim 1, **characterized in that** the holding clip (16) is a bent sheet metal part.

3. The assembly according to either of the preceding claims, **characterized in that** the plate (22) has at least one spring tongue (38) provided therein, which is bent out from the plane of the plate towards the sensor.

4. The assembly according to claim 3, **characterized in that** the spring tongue (38) is defined by two parallel incisions (36) in the plate (22) of the holding clip (16).

5. The assembly according to claim 3 or claim 4, **characterized in that** an opening (40) for a fixing projection (42) of the sensor (10) is provided in the spring tongue (38).

6. The assembly according to any of the preceding claims, **characterized in that** the plate (22) is provided with a bent edge (24) which serves to fix the sensor in place.

7. The assembly according to claim 6, **characterized in that** the holding arm (26) and/or the detent arm (28) are provided on the bent edge (24) of the plate (22).

8. The assembly according to claim 7 or claim 8, **characterized in that** the bent edge (24) is provided with a recess for a plug connector (43) of the sensor.

9. The assembly according to any of claims 1 to 6, **characterized in that** the plate (22) is provided with an installation aid (50) by means of which the holding clip (16) can be connected with the sensor (10).

10. The assembly according to claim 9, **characterized in that** the installation aid is constructed in the manner of a lateral tongue (50).

11. The assembly according to claim 9 or claim 10, **characterized in that** the installation aid includes a guide slot (52) into which a guide projection (54) of the sensor (10) can engage.

12. The assembly according to any of the preceding claims, **characterized in that** two holding arms (26) are provided on one side of the plate, and two detent arms (28) are provided on the other side.

13. The assembly according to any of claims 1 to 11, **characterized in that** the two detent arms (28) are connected with the plate (22) by means of a shared connecting cross-piece (29).

14. The assembly according to any of the preceding claims, **characterized in that** the assembly includes a holding frame (12) which can be attached to a window pane of a motor vehicle.

## Revendications

1. Ensemble comprenant un capteur de pluie (10) et une pince de retenue (16) pour le capteur de pluie (10), la pince de retenue présentant une plaque (22) qui est apte à recouvrir le capteur, ainsi qu'au moins un bras de retenue (26) et au moins un bras d'enclenchement (28) qui sont réalisés de manière à pouvoir s'engager sur un cadre de retenue (12) pour la fixation de l'ensemble, la pince de retenue (16) étant réalisée d'un seul tenant, et le capteur de pluie (19) étant pré-monté sur la pince de retenue (16), **caractérisé en ce que** le capteur présente une saillie de guidage (54) qui s'engage dans une coulisse de guidage (52) d'une patte de montage (50) de la pince de retenue (16), et **en ce que** le capteur est pré-monté sur la pince de retenue (16) de manière imperdable au moyen de la saillie de guidage (54).

2. Ensemble selon la revendication 1, **caractérisé en ce que** la pince de retenue (16) est une pièce de tôle pliée.

3. Ensemble selon l'une des revendications précédentes, **caractérisé en ce qu'**au moins une patte ressort (38) est prévue dans la plaque (22), laquelle est pliée hors du plan de la plaque en direction du capteur.

4. Ensemble selon la revendication 3, **caractérisé en ce que** la patte ressort (38) est définie par deux encoches (36) dans la plaque (22) de la pince de retenue (16).

5. Ensemble selon la revendication 3 ou la revendication 4, **caractérisé en ce qu'**un orifice (40) pour une saillie de fixation (42) du capteur (10) est prévu dans la patte ressort (38).

6. Ensemble selon l'une des revendications précédentes, **caractérisé en ce que** la plaque (22) est pourvue d'un bord replié (24) qui sert à fixer le capteur.

7. Ensemble selon la revendication 6, **caractérisé en ce que** le bras de retenue (26) ou le bras d'enclenchement (28) est prévu sur le bord replié (24) de la plaque (22).

8. Ensemble selon la revendication 7 ou la revendication 8, **caractérisé en ce que** le bord replié (24) est pourvu d'un évidement pour un connecteur enfichable (43) du capteur.

9. Ensemble selon l'une des revendications 1 à 6, **caractérisé en ce que** la plaque (22) est pourvue d'une aide de montage (50) au moyen de laquelle la pince de retenue (16) peut être reliée au capteur (10).

10. Ensemble selon la revendication 9, **caractérisé en ce que** l'aide de montage est réalisée à la manière d'une patte latérale (50).

11. Ensemble selon la revendication 9 ou la revendication 10, **caractérisé en ce que** l'aide de montage présente une coulisse de guidage (52) dans laquelle une saillie de guidage (54) du capteur (10) peut s'engager.

12. Ensemble selon l'une des revendications précédentes, **caractérisé en ce que** deux bras de retenue (26) sont prévus d'un côté de la plaque et deux bras d'enclenchement (28) sont prévus de l'autre côté.

13. Ensemble selon l'une des revendications 1 à 11, **caractérisé en ce que** les deux bras d'enclenchement (28) sont reliés à la plaque (22) au moyen d'une barrette de raccordement (29) commune.

14. Ensemble selon l'une des revendications précédentes, **caractérisé en ce que** l'ensemble présente un cadre de retenue (12) qui est apte à être monté sur une vitre d'un véhicule automobile.
